# FASCICULE DE BREVET EUROPEEN

(11) **EP 1 650 449 B1**
(45) Date de publication et mention de la délivrance du brevet: **26.12.2007**
(21) Numéro de dépôt: 05291984.2
(22) Date de dépôt: 23.09.2005
(51) Int. Cl.: F16C 27/04, F16F 15/023, F01D 25/16

(54) **Dispositif de support et de guidage d'un arbre en rotation**
Vorrichtung zum Tragen und Führen einer rotierenden Welle
Device for supporting and guiding a rotating shaft

(30) Priorité: 19.10.2004 FR 0411046
(43) Date de publication de la demande: 26.04.2006
(73) Titulaire: SNECMA, 75015 Paris (FR)
(72) Inventeur: Laurant, Franck, 76430 Saint Romain de Colbosc (FR); Defaye, Cyril, 79000 Niort (FR)
(74) Mandataire: Ramey, Daniel

(56) Documents cités:
- US-A- 5 067 825
- US-A- 5 106 208
- US-A- 5 197 807
- PATENT ABSTRACTS OF JAPAN vol. 1997, no. 02, 28 février 1997 (1997-02-28) & JP 08 261231 A (ISHIKAWAJIMA HARIMA HEAVY IND CO LTD), 8 octobre 1996 (1996-10-08)

## Description

L'invention concerne un dispositif de support et de guidage d'un arbre en rotation, notamment d'un arbre de rotor dans une turbomachine telle qu'un turboréacteur ou un turbopropulseur d'avion.

Un tel dispositif de support et de guidage, selon le préambule de la revendication 1, est connu du document US 5 197 807 A.

Les petits balourds de l'arbre de rotor ont tendance à provoquer des excentrations et des vibrations radiales de l'arbre et de ses paliers, que l'on amortit au moyen de dispositifs à compression de film d'huile (squeeze film dampers) associés aux paliers de support et de guidage de l'arbre.

Chaque amortisseur à compression d'un film d'huile comprend un logement formé dans un carter de support du palier correspondant et dans lequel la bague extérieure du palier est montée avec un jeu radial faible. Un espace annulaire délimité autour de la bague dans ce logement est rempli d'huile et est fermé axialement par des éléments annulaires d'étanchéité qui sont libres en rotation dans des gorges annulaires de la bague extérieure du palier et qui coopèrent à étanchéité avec une surface cylindrique interne du carter.

Des orifices d'entrée d'huile sont formés dans le carter et débouchent dans l'espace annulaire précité et des orifices de sortie d'huile sont formés dans les éléments annulaires d'étanchéité et débouchent à l'extérieur de cet espace annulaire pour permettre de faire circuler l'huile de façon continue dans l'espace annulaire et de la refroidir en dehors de cet espace afin d'évacuer l'énergie thermique dissipée par les frottements résultant de la compression d'un film d'huile par la bague extérieure du palier lors de ses mouvements orbitaux dans le logement précité. A défaut de refroidissement, l'élévation de température de l'huile dans l'espace annulaire provoquerait une diminution importante de sa viscosité et donc de l'amortissement des mouvements orbitaux de la bague extérieure du palier de l'arbre.

Dans le cas d'un arbre de turboréacteur ou de turbopropulseur d'avion, les éléments annulaires d'étanchéité sont formés en général par des segments résistant aux températures élevées, ce segments étant des bagues fendues en métal élastiquement déformable, habituellement à section rectangulaire. Les fentes de ces segments, qui peuvent être des fentes à coupe droite ou à recouvrement, forment des orifices de sortie d'huile. Pour assurer un débit de fuite d'huile suffisant, il est préférable d'utiliser des segments à coupe droite plutôt que des segments à recouvrement et de réaliser un embrèvement sur la périphérie extérieure de chaque segment, au niveau de sa fente, pour calibrer le débit de fuite d'huile.

La fuite d'huile est ainsi localisée en un point précis de la circonférence du segment. On constate toutefois une forte variation du débit de fuite par cette fente en fonction de la position angulaire de la bague extérieure du palier par rapport à cette fente. Une analyse du comportement de l'amortisseur a montré que la bague extérieure du palier est soumise à un effort hydrostatique fixe (non tournant) et à un effort hydrodynamique tournant, l'effort hydrostatique fixe étant du même ordre de grandeur que l'effort hydrodynamique et étant dû à la fuite d'huile par la fente du segment.

Cet effort hydrostatique fixe confère au film d'huile comprimé un comportement non-axisymétrique qui n'est pas maîtrisable du fait que les segments qui sont libres en rotation dans les gorges de la bague extérieure du palier, peuvent être entraînés en rotation de façon aléatoire par frottement, ce qui fait varier de façon non contrôlable les positions angulaires des fentes des segments l'une par rapport à l'autre et par rapport à la bague extérieure du palier.

Il en résulte que le comportement du film d'huile n'est pas maîtrisable et que l'on ne peut amortir de façon totalement efficace les excentrations et vibrations radiales de l'arbre.

L'invention a notamment pour but d'apporter une solution simple, efficace et économique à ce problème, qui n'était jusque-là pas connu dans la technique, en annulant ou au moins en réduisant très fortement les efforts hydrostatiques dus aux fuites d'huile localisées dans les fentes des segments précités.

Elle propose à cet effet un dispositif de support et de guidage d'un arbre en rotation, en particulier d'un arbre de rotor d'une turbomachine telle qu'un turboréacteur ou un turbopropulseur d'avion, comprenant au moins un palier monté autour de l'arbre et un amortisseur à compression de film d'huile agencé autour du palier, cet amortisseur comprenant un logement formé dans un carter externe et délimitant autour d'une bague extérieure du palier un espace annulaire rempli d'huile et fermé axialement par des éléments annulaires d'étanchéité qui sont montés libres en rotation dans des gorges annulaires de ladite bague et qui comprennent chacun une surface périphérique extérieure coopérant à étanchéité avec une surface cylindrique interne du carter, des orifices d'amenée d'huile étant formés dans le carter et des orifices de sortie d'huile étant formés dans les éléments annulaires d'étanchéité pour permettre une circulation d'huile dans ledit espace annulaire et le refroidissement de l'huile à l'extérieur de cet espace annulaire, caractérisé en ce que chaque élément annulaire d'étanchéité comprend quelques orifices calibrés de sortie d'huile, répartis à distance les uns des autres sur la surface périphérique extérieure de l'élément annulaire et agencés de façon à sensiblement annuler la résultante des efforts hydrostatiques générés dans le film d'huile à la rotation de l'arbre et résultant des débits de fuite par lesdits orifices calibrés.

Les débits de fuite d'huile localisés en quelques points de la périphérie du segment génèrent chacun un effort hydrostatique sur la bague du palier, chaque effort étant orienté approximativement en direction de l'orifice de sortie correspondant.

En répartissant ces orifices de sortie sur la périphérie du segment, on parvient à annuler sensiblement la résultante de ces efforts hydrostatiques en conservant uniquement les efforts hydrodynamiques qui confèrent l'amortissement souhaité des mouvement orbitaux de la bague du palier. Cela permet d'obtenir un comportement axisymétrique de l'amortisseur à compression de film d'huile et de mieux maîtriser la dynamique de l'arbre du rotor.

Avantageusement, le nombre d'orifices de sortie formés dans chaque élément annulaire d'étanchéité est inférieur ou égal à 8 et est de préférence inférieur ou égal à 5.

Chaque élément annulaire d'étanchéité est fendu en un point de sa circonférence et comporte un nombre pair ou impair d'orifices calibrés de sortie d'huile, ces orifices et la fente de l'élément annulaire étant répartis de façon sensiblement équidistance les uns des autres sur la circonférence de l'élément annulaire.

Dans un mode de réalisation préféré de l'invention, le nombre d'orifices calibrés est impair et l'un des ces orifices est diamétralement opposé à la fente de l'élément annulaire.

De façon commode, les orifices calibrés de sortie d'huile sont formés par des échancrures de la périphérie extérieure des éléments annulaires.

Dans le cas d'un arbre de rotor d'un turboréacteur ou d'un turbopropulseur d'avion, les éléments annulaires d'étanchéité sont des segments métalliques, notamment à section rectangulaire et peuvent comporter chacun une fente à coupe droite ou en biseau ou une fente à recouvrement.

Dans d'autres applications où l'arbre tournant n'est pas soumis à des températures élevées, les éléments annulaires d'étanchéité peuvent être constitués par des joints toriques comportant quelques orifices calibrés de sortie d'huile répartis sur leur circonférence.

L'invention concerne également un arbre de rotor de turbomachine, caractérisé en ce qu'il est supporté et guidé par un dispositif du type tel que décrit ci-dessus.

L'invention concerne enfin une turbomachine, telle qu'un turboréacteur ou un turbopropulseur d'avion, caractérisée en ce qu'elle comprend un dispositif de support et de guidage d'un arbre en rotation du type tel que décrit ci-dessus.

L'invention sera mieux comprise et d'autres caractéristiques, détails et avantages de celle-ci apparaîtront plus clairement à la lecture de la description qui suite, faite à titre d'exemple en référence aux dessins annexés dans lesquels :
- la figure 1 est une vue schématique en perspective et en coupe axiale d'une partie d'un arbre de rotor équipé d'un dispositif selon l'invention ;
- la figure 2 est une vue en perspective d'un segment annulaire d'étanchéité de la technique antérieure ;
- la figure 3 est une vue schématique partielle d'un autre segment d'étanchéité de la technique antérieure ;
- les figures 4, 5 et 6 sont des vues schématiques représentant les efforts hydrostatiques et hydrodynamiques appliqués à la bague extérieure d'un palier dans la technique antérieure ;
- la figure 7 est une vue schématique en perspective d'un segment annulaire d'étanchéité selon l'invention ;
- la figure 8 est un graphe représentant des efforts hydrostatiques appliqués à la bague extérieure d'un palier selon l'invention.

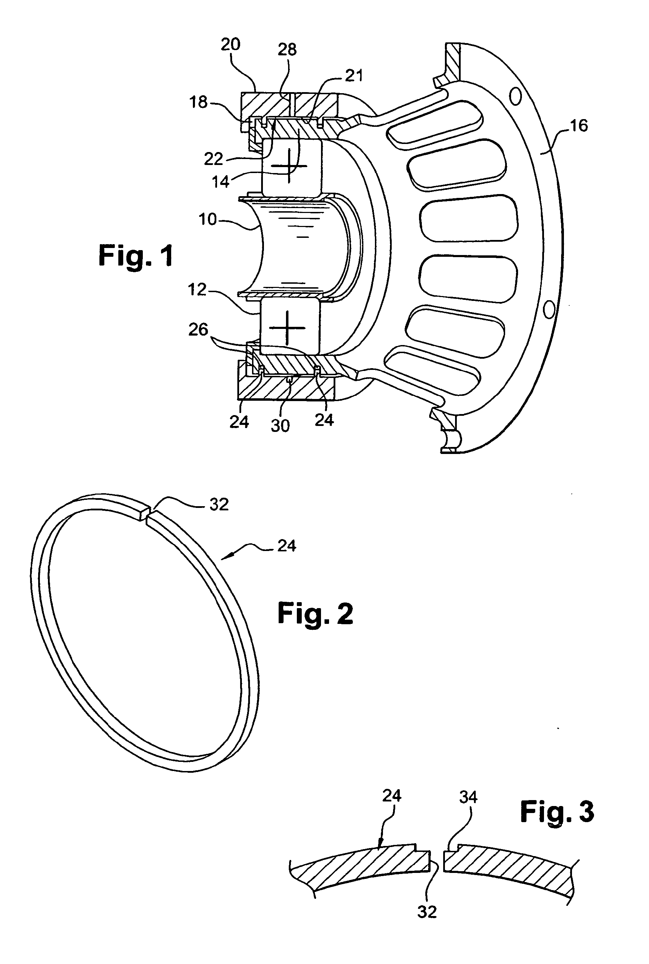

En figure 1, la référence 10 désigne un arbre de rotor d'une turbomachine telle qu'un turboréacteur ou un turbopropulseur d'avion, qui est centré et guidé en rotation dans un palier 12 par exemple du type à roulement et dont une bague extérieure 14 solidaire d'une cage d'écureuil 16 est montée dans un logement cylindrique 18 d'un carter 20 qui constitue autour de la bague 14 un amortisseur à compression de film d'huile ou « squeeze film damper » selon la terminologie anglo-saxonne.

Un espace annulaire 22 est délimité autour de la bague 14 par la surface cylindrique 21 du logement 18 et est fermé axialement par des éléments annulaires d'étanchéité 24 montés dans des gorges annulaires 26 de la surface cylindrique externe de la bague 14 . L'espace annulaire 22 est rempli d'huile amenée par un orifice d'entrée 28 formé par un perçage radial du carter 20 et débouchant dans une gorge annulaire 30 de la surface cylindrique 21 autour de la bague 14.

En variante, l'huile peut être amenée dans l'espace annulaire 22 par plusieurs perçages radiaux 28 du carter 20 répartis autour de l'axe de rotation de l'arbre 10.

Dans le cas de l'arbre de rotor d'un turboréacteur ou d'un turbopropulseur, les éléments annulaires d'étanchéité 24 sont des segments métalliques fendus, à section transversale rectangulaire, ces segments étant montés libres en rotation dans les gorges annulaires 26 de la bague 14 et s'appuyant à étanchéité par leur périphérie externe sur la surface cylindrique 21 du carter 20.

Dans la technique antérieure, les segments 24 sont du type représenté en figure 2 et comprennent par exemple une fente 32 à coupe droite qui constitue un orifice de sortie d'huile de sorte que l'huile amenée dans l'espace annulaire 22 par le ou les perçages radiaux 28 du carter peut circuler dans cet espace annulaire et sortir à l'extérieur de cet espace par les fentes 32 des segments 24 pour être refroidie. En général, l'huile amenée dans l'espace annulaire 22 sert également d'huile de lubrification du palier 12.

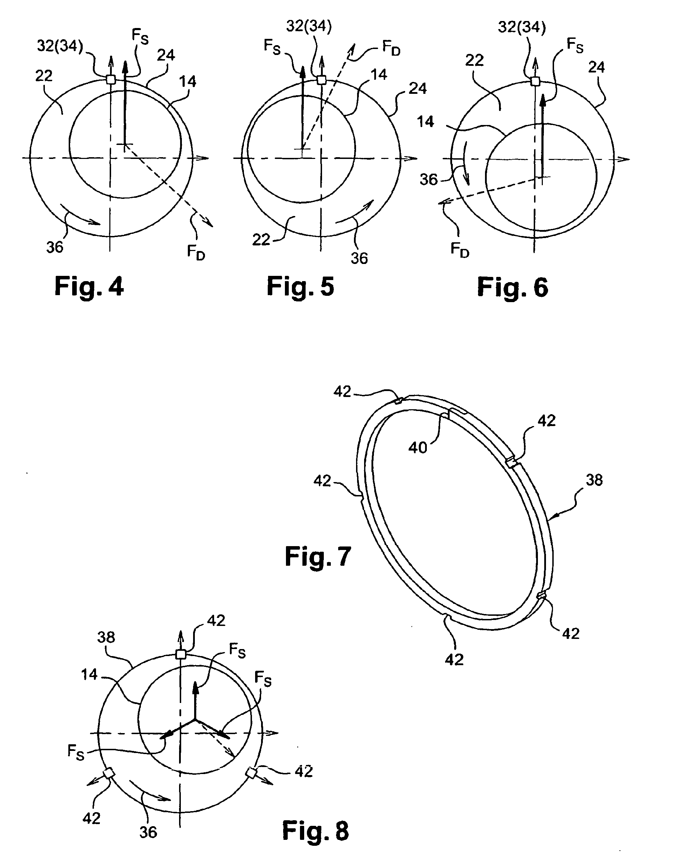

En variante et comme représenté schématiquement en figure 3, les segments 24 de la technique antérieure comprennent un embrèvement 34 formé dans leur périphérie externe au niveau de la fente 32 et permettant de calibrer le débit de fuite d'huile au niveau de la fente 32.

L'huile dans l'espace annulaire 22 entourant la bague 14 est à une pression suffisante pour éviter les phénomènes de cavitation lors des mouvements orbitaux de la bague 14 dans le logement 18. Ces mouvements orbitaux dus aux excentrations et vibrations radiales de l'arbre 10 sont amortis par compression d'un film d'huile entre la bague 14 et la surface cylindrique du logement 18.

Typiquement, la pression de l'huile dans l'espace annulaire 22 est inférieure ou égale à 10 bars environ et peut augmenter jusqu'à 100 bars dans le film d'huile comprimé par la bague 14, l'épaisseur de ce film d'huile étant de l'ordre de 0,2 - 0,3 millimètre.

Quand la bague 14 est équipée de segments 24 du type représenté en figure 2 ou en figure 3, les débits de fuite d'huile localisés au niveau de la fente 32 ou de l'embrèvement 34 de chaque segment perturbent le champ de pression dans le film d'huile et donnent naissance à un effort hydrostatique F_{S} appliqué à la bague 14 et qui est fixe (non tournant) et orienté sensiblement dans la direction de l'orifice 32 ou 34 de sortie d'huile comme représenté schématiquement aux figures 4, 5 et 6.

La compression du film d'huile dans l'espace annulaire 22 par la bague 14 dont le mouvement orbital est symbolisé par la flèche 36, génère également un effort hydrodynamique F_{D} qui est tournant et dont la direction dépend de la position angulaire de la bague 14 par rapport à l'orifice 32 ou 34 de sortie d'huile.

L'amplitude de l'effort hydrostatique F_{S} est sensiblement du même ordre que l'effort hydrodynamique F_{D.} Les débits de fuite d'huile par les orifices de sortie 32, 34 formés dans les segments 24 varient également en fonction de la position angulaire de la bague 14 dans son mouvement orbital, la périphérie de la bague 14 étant susceptible de masquer ou de fermer à peu près complètement l'orifice de sortie 32 ou 34 de chaque segment 24.

En outre, les segments 24 sont libres en rotation dans les gorges 26 de la bague 14 et peuvent donc tourner dans ces gorges, de sorte que les positions angulaires des orifices de sortie 32 ou 34 ne sont pas fixes et varient dans le temps l'une par rapport à l'autre et par rapport à la bague 14.

Il en résulte que le comportement du film d'huile sous pression n'est pas axisymétrique, ce qui ne permet pas de maîtriser l'amortissement des vibrations radiales et des excentrations dynamiques de l'arbre 10.

La présente invention permet de résoudre ce problème par la formation de plusieurs orifices de sortie d'huile répartis sur la circonférence d'un segment 24 comme représenté schématiquement en figure 7, ce qui permet de générer plusieurs efforts hydrostatiques F_{S} dont la résultante est nulle ou sensiblement nulle comme illustré schématiquement en figure 8.

Le segment annulaire 38 selon l'invention comprend par exemple une fente 40 du type à recouvrement autorisant un débit de fuite d'huile relativement faible à l'extérieur d'un espace annulaire 22 et des échancrures 42 formées dans sa périphérie extérieure et autorisant des débits de fuite calibrés d'huile à l'extérieur de l'espace annulaire 22, ces échancrures 42 étant réparties de façon symétrique par rapport à la fente 40 et de façon relativement uniforme sur la circonférence du segment 38.

Le nombre d'échancrures 42 est relativement faible et est de préférence inférieur ou égal à 5. Dans l'exemple représenté, le segment 38 comprend cinq échancrures 42 dont l'une est diamétralement opposée à la fente 40 du segment.

Les débits de fuite d'huile par la fente 40 et les échancrures 42 sont ainsi répartis sur la circonférence du segment 38, le faible nombre d'échancrures 42 permettant de calibrer avec précision le débit total de fuite d'huile, ce qui ne serait pas le cas si le nombre d'échancrures formées à la périphérie du segment 38 était relativement important.

La figure 8 illustre le résultat fourni par l'invention dans le cas où le segment 38 comporte trois orifices identiques ou sensiblement identiques 42 de sortie d'huile formés à 120° les uns des autres sur sa périphérie externe.

Dans ce cas, chaque débit de fuite localisé au niveau d'un orifice 42 génère un effort hydrostatique F_{S} appliqué à la bague 14, les trois efforts F_{S} étant orientés à 120° les uns des autres et ayant une résultante nulle ou sensiblement nulle. La bague 14 du palier n'est plus alors soumise qu'à un effort hydrodynamique tournant qui conduit à un comportement axisymétrique du film d'huile en compression, permettant l'amortissement souhaité des vibrations radiales et excentrations dynamiques de l'arbre de rotor.

Les segments selon l'invention peuvent être à coupe à recouvrement comme représenté en figure 7, ou à coupe droite comme celui de la figure 2 ou à coupe en biseau.

Dans le cas où l'arbre 10 n'est pas un arbre de rotor de turbopropulseur ou de turboréacteur dont les paliers peuvent être soumis à des températures élevées, les éléments annulaires d'étanchéité de la bague 14 peuvent être constitués par des joints toriques comportant des orifices calibrés de sortie d'huile formés dans leur périphérie extérieure.

## Revendications

1. Dispositif de support et de guidage d'un arbre en rotation, en particulier d'un arbre de rotor (10) d'une turbomachine telle qu'un turboréacteur ou un turbopropulseur d'avion, comprenant au moins un palier (12) monté autour de l'arbre et un amortisseur (22, 24) à compression de film d'huile agencé autour du palier (12), cet amortisseur comprenant un logement (18) formé dans un carter externe (20) et délimitant autour d'une bague extérieure (14) du palier un espace annulaire (22) rempli d'huile et fermé axialement par des éléments annulaires d'étanchéité (24) qui sont libres en rotation dans des gorges annulaires (26) de ladite bague extérieure (14) du palier et qui comprennent chacun une surface périphérique extérieure coopèrant à étanchéité avec une surface cylindrique interne (21) du carter, au moins un orifice (28) d'amenée d'huile étant formé dans le carter et des orifices (32, 34) de sortie d'huile étant formés dans les éléments annulaires d'étanchéité pour permettre une circulation d'huile dans ledit espace annulaire (22) et le refroidissement de l'huile à l'extérieur de cet espace annulaire, **caractérisé en ce que** chaque élément annulaire d'étanchéité (38) comprend quelques orifices calibrés (42) de sortie d'huile répartis à distance les uns des autres sur la surface périphérique extérieure dudit élément annulaire (38) et agencés de façon à sensiblement annuler la résultante des efforts statiques générés dans le film d'huile à la rotation de l'arbre (10) et résultant des débits de fuite d'huile par lesdits orifices calibrés (42).

2. Dispositif selon la revendication 1, **caractérisé en ce que** le nombre d'orifices calibrés (42) formés dans chaque élément annulaire (38) est inférieur ou égal à 8.

3. Dispositif selon la revendication 1 ou 2, **caractérisé en ce que** chaque élément annulaire (38) est fendu en un point de sa circonférence et comporte un nombre pair ou impair d'orifices calibrés (42) de sortie d'huile, ces orifices et la fente (40) de l'élément annulaire étant répartis de façon sensiblement équidistante les uns des autres sur la circonférence de l'élément annulaire.

4. Dispositif selon la revendication 3, **caractérisé en ce que** le nombre d'orifices (42) précité est impair et l'un de ces orifices est diamétralement opposé à la fente (40) de l'élément annulaire (38).

5. Dispositif selon l'une des revendications précédentes, **caractérisé en ce que** lesdits orifices calibrés (42) de sortie d'huile sont formés par des échancrures de la périphérie extérieure des éléments annulaires (38).

6. Dispositif selon l'une des revendications précédentes, **caractérisé en ce que** les éléments annulaires d'étanchéité sont des segments métalliques (38), en particulier à section rectangulaire.

7. Dispositif selon la revendication 6, **caractérisé en ce que** les segments (38) comportent chacun une fente à coupe droite ou en biseau ou à recouvrement.

8. Dispositif selon l'une des revendications 1 à 5, **caractérisé en ce que** les éléments annulaires d'étanchéité sont des joints toriques.

9. Arbre de rotor de turbomachine, **caractérisé en ce qu'**il est supporté et guidé par un dispositif selon l'une des revendications précédentes.

10. Turbomachine, telle qu'un turboréacteur ou un turbopropulseur d'avion, **caractérisée en ce qu'**elle comprend un dispositif de support et de guidage d'un arbre en rotation selon l'une des revendications 1 à 8.

## Claims

1. A device for supporting and guiding a shaft in rotation, in particular a rotor shaft (10) of a turbomachine such as an airplane turboprop or turbojet, the device comprising at least one bearing (12) mounted around the shaft and an oil squeeze film damper (22, 24) arranged around the bearing (12), said damper comprising a housing (18) formed in an outer case (20) and defining an annular space (22) around an outer ring (14) of the bearing, which annular space (22) is filled with oil and is closed axially by annular sealing elements (24) that are free to rotate in annular grooves (26) in said outer bearing ring (14) and that each comprises an outer peripheral surface co-operating in sealed manner with an inner cylindrical surface (21) of the case, at least one oil feed orifice (28) being formed in the case, and oil outlet orifices (32, 34) being formed in the annular sealing elements to allow oil to flow in said annular space (22) and to allow said oil to be cooled outside the annular space, the device being **characterized in that** each annular sealing element (38) includes a plurality of calibrated oil outlet orifices (42) spaced apart from one another on the outer peripheral surface of said annular element (38) and arranged in such a manner as to substantially cancel the resultant of the static forces generated in the oil film on rotation of the shaft (10) and resulting from the oil leakage flows through said calibrated orifices (42).

2. A device according to claim 1, **characterized in that** the number of calibrated orifices (42) formed in each annular element (38) is less than or equal to 8.

3. A device according to claim 1 or claim 2, **characterized in that** each annular element (38) is split at a point around its circumference and has an even or odd number of calibrated oil outlet orifices (42), these orifices and the splitting slot (40) in the annular element being distributed so as to be substantially equidistant from one another around the circumference of the annular element.

4. A device according to claim 3, **characterized in that** the above-mentioned number of orifices (42) is odd, with one of said orifices being diametrically opposite the slot (40) in the annular element (38).

5. A device according to any preceding claim, **characterized in that** said calibrated oil outlet orifices (42) are formed by notches in the outer periphery of the annular elements (38).

6. A device according to any preceding claim, **characterized in that** the annular sealing elements are metal segments (38), in particular segments of rectangular section.

7. A device according to claim 6, **characterized in that** each segment (38) has a slot that is cross-cut or that is obliquely cut or that is cut with an overlap.

8. A device according to any one of claims 1 to 5, **characterized in that** the annular sealing elements are O-rings.

9. A turbomachine rotor shaft, **characterized in that** it is supported and guided by a device according to any preceding claim.

10. A turbomachine such as an airplane turboprop or turbojet, **characterized in that** it includes a device according to any one of claims 1 to 8 for supporting and guiding a rotating shaft.

## Patentansprüche

1. Vorrichtung zum Stützen und Führen einer Drehwelle, insbesondere einer Rotorwelle (10) einer Turbomaschine wie beispielsweise eines Turbotriebwerks oder Turbopropantriebs eines Flugzeugs, die mindestens ein um die Welle herum angebrachtes Lager (12) und einen um das Lager (12) herum angebrachten Schwingungsdämpfer (22, 24) mit Ölfilmkompression umfasst, wobei dieser Schwingungsdämpfer eine Aufnahme (18) aufweist, die in einem Außengehäuse (20) gebildet ist und um einen Außenring (14) des Lagers herum einen ringförmigen Zwischenraum (22) abgrenzt, der mit Öl gefüllt ist und axial durch ringförmige Dichtungselemente (24) verschlossen ist, die drehfrei in ringförmigen Auskehlungen (26) dieses Außenrings (14) des Lagers sitzen und jeweils eine nach außen gerichtete Außenumkreisfläche aufweisen, die unter Dichtigkeit mit einer zylindrischen Innenfläche (21) des Gehäuses zusammenwirkt, wobei in dem Gehäuse mindestens eine Öffnung (28) zur Zuführung von Öl gebildet ist und in den ringförmigen Dichtungselementen Ölauslass-Öffnungen (32, 34) gebildet sind, um eine Ölzirkulation in dem ringförmigen Zwischenraum (22) und das Kühlen des Öls außerhalb dieses ringförmigen Zwischenraums zu ermöglichen,
**dadurch gekennzeichnet,**
**dass** jedes ringförmige Dichtungselement (38) einige kalibrierte Ölauslass-Öffnungen (42) aufweist, die auf der nach außen gerichteten Außenumkreisfläche dieses ringförmigen Dichtungselements (38) in Abständen voneinander verteilt angeordnet sind und dergestalt ausgeführt sind, dass die Resultierenden der statischen Kräfte, die in dem Ölfilm bei der Drehbewegung der Welle (10) erzeugt werden und Ergebnis der durch die genannten kalibrierten Öffnungen (42) leckenden Ölmengen sind, im Wesentlichen neutralisiert werden.

2. Vorrichtung nach Anspruch 1,
**dadurch gekennzeichnet,**
**dass** die Anzahl der in jedem ringförmigen Element (38) gebildeten kalibrierten Öffnungen (42) geringer als oder gleich 8 ist.

3. Vorrichtung nach Anspruch 1 oder 2,
**dadurch gekennzeichnet,**
**dass** jedes ringförmige Element (38) an einer Stelle seines Umfangs einen Spalt aufweist und eine gerade oder ungerade Anzahl kalibrierter Ölauslass-Öffnungen aufweist, wobei diese Öffnungen und der Spalt (40) des ringförmigen Elements im Wesentlichen in gleichen Abständen voneinander auf der Umfangslinie des ringförmigen Elements verteilt angeordnet sind.

4. Vorrichtung nach Anspruch 3,
**dadurch gekennzeichnet,**
**dass** die oben genannte Anzahl von Öffnungen (42) ungerade ist und eine dieser Öffnungen dem Spalt (40) des ringförmigen Elements (38) diametral gegenüber liegt.

5. Vorrichtung nach einem der vorherigen Ansprüche,
**dadurch gekennzeichnet,**
**dass** diese kalibrierten Ölauslass-Öffnungen (42) durch Aussparungen der Außenumfangslinie der ringförmigen Elemente (38) gebildet werden.

6. Vorrichtung nach einem der vorherigen Ansprüche,
**dadurch gekennzeichnet,**
**dass** die ringförmigen Dichtungselemente metallene Segmente (38) sind, insbesondere mit rechteckigem Querschnitt.

7. Vorrichtung nach Anspruch 6,
**dadurch gekennzeichnet,**
**dass** die Segmente (38) jeweils einen Spalt mit geradem oder schrägem Schnitt oder mit Überlappung aufweisen.

8. Vorrichtung nach einem der Ansprüche 1 bis 5,
**dadurch gekennzeichnet,**
**dass** die ringförmigen Dichtungselemente O-Ringdichtungen sind.

9. Turbomaschinen-Rotorwelle,
**dadurch gekennzeichnet,**
**dass** sie von einer Vorrichtung nach einem der vorherigen Ansprüche gestützt und geführt wird.

10. Turbomaschine wie beispielsweise eines Turbotriebwerks oder Turbopropantriebs eines Flugzeugs,
**dadurch gekennzeichnet,**
**dass** sie eine Vorrichtung zum Stützen und Führen einer Drehwelle nach einem der Ansprüche 1 bis 8 enthält.
